# EUROPÄISCHE PATENTSCHRIFT

(11) **EP 1 036 014 B1**
(45) Veröffentlichungstag und Bekanntmachung des Hinweises auf die Patenterteilung: **04.10.2001**
(21) Anmeldenummer: 98963327.6
(22) Anmeldetag: 05.11.1998
(51) Int. Cl.: B65D 57/00, B65G 49/06

(54) **ABSTANDHALTER**
SPACER
DISPOSITIF D'ECARTEMENT

(30) Priorität: 05.11.1997 DE 19748788
(43) Veröffentlichungstag der Anmeldung: 20.09.2000
(73) Patentinhaber: Mennicken, Willi, 52146 Würselen (DE)
(72) Erfinder: Mennicken, Willi, 52146 Würselen (DE)
(74) Vertreter: König, Werner, Dipl.-Ing.
(86) Internationale Anmeldenummer: DE9803231
(87) Internationale Veröffentlichungsnummer: WO9924330

(56) Entgegenhaltungen:
- EP-A- 0 164 631
- DE-A- 3 442 970
- DE-A- 3 513 560
- DE-U- 9 209 051
- US-A- 3 385 462

## Beschreibung

Es stellt sich häufig das Problem, Bauteile mit zumindest teilweise äquidistant verlaufenden Flächen zum Transport oder zur Zwischenlagerung zu stapeln oder im wesentlichen senkrecht gestellt aneinanderzulegen. Dabei ist zu beachten, daß sich durch Eigengewicht oder dynamische Belastungen keine unerwünschten Verformungen der Bauteile, die grundsätzlich auch zu Beschädigungen führen können, ergeben.

Mit den insoweit bei Flachglasscheiben auftretenden derartigen Problemen befaßt sich die DE 34 42 970 C2. Dort wird eine streifenförmige Zwischenlage zum Befestigen an einer äußeren Flachglasscheibe eines Scheibenstapels beschrieben, die mittels elastischer Saugnäpfe an einer glatten Scheibenfläche festlegbar ist. Weil die Zwischenlage verhältnismäßig großflächig ist - bis zu 3,2m lang bei einer Breite von 60 bis 100 mm und einer Dicke von 10 bis 40 mm - verwendet man dort insbesondere Styroporschaumstreifen, die beidseitig mit Kraftpapier belegt sind. An dieser Zwischenlage werden nun Saugnäpfe festgelegt. Aufgrund des wenig stabilen Materials der Zwischenlage wird jedem Saugnapf ein Gegenhalter zugeordnet in der Art einer Druckknopfverbindung, wobei diese Verbindung von Saugnapf und Gegenhalter die Zwischenlage durchdringt.

Der bekannte Abstandhalter erfordert zu seinem Funktionieren also eine Zwischenlage, einen Saugnapf und einen Gegenhalter, also für einen derartigen Massenartikel einen sehr hohen Herstellungsaufwand.

Die Aufgabe der vorliegenden Erfindung besteht nun darin, einen Abstandhalter zur Anordnung zwischen zumindest teilweise äquidistant verlaufenden Flächen vorübergehend benachbart anzuordnender Bauteile, insbesondere zwischen scheiben- oder tafelförmigen Bauteilen, so auszuführen, daß er zuverlässig haftet, die aufkommenden Lasten definierbar übernimmt und dabei wiederverwendbar ist.

Diese Aufgabe wird bei einem Abstandhalter gemäß Anspruch 1 oder Anspruch 2 gelöst.

Dieser Abstandhalter besteht erfindungsgemäß nur aus zwei Elementen, von denen das eine, das Haftelemen, das ein nach außen offener Saugnapf ist, für die genaue Einhaltung der Ortsbestimmung zuständig ist, nicht aber für die Aufbringung der erforderlichen Stützkräfte, während der andere, das Stützelement, die Stützkräfte exakt definiert übernimmt. Der Abstandhalter kann auf seinen beiden Stirnflächen jeweils mit einem Haftelement versehen sein, um somit Haftung an jedem der beiderseits anliegenden Bauteile zu erreichen.

Der Saugnapf kann in jeder üblichen Weise gestaltet sein. Es ist möglich, Saugnapf = Haftelement und Stützelement aus dem gleichen Werkstoff herzustellen und die voneinander abweichenden Funktionen durch die Ausgestaltung, z.B. die Wandstärken, zu bestimmen. Darüber hinaus ist es auch möglich, als Werkstoff für den Saugnapf z.B. Gummi, PVC, Silicon oder dergleichen zu verwenden und für das Stützelement einen härteren Werkstoff zu benutzen, z.B. ein Polyethylen. Polyamid oder Polyurethan. Zweckmäßig ist es, für Stützelement und Haftelement derart artverwandte Werkstoffe zu benutzen, die bei einem späteren Recycling nicht voneinander getrennt werden müssen.

Gemäß Hauptanspruch 1 ist vorgesehen, daß der Saugnapf lösbar mit dem Stützelement verbunden ist. Diese Version eignet sich insbesondere bei Verwendung unterschiedlicher Materialien, die nicht ohne weiteres einstückig verbindbar sind. Sie hat im übrigen den Vorteil, daß bei Verwendung von deutlich unterschiedlichen Werkstoffen für Haftelement und Stützelement für das Recyclen eine Trennung dieser Werkstoffe ohne weiteres vorgenommen werden kann. Weiter ergibt dieser Vorschlag den Vorteil, daß im Falle der Beschädigung eines Elements ein Austausch vorgenommen werden kann.

Der erfindungsgemäße Abstandhalter ist ferner so ausgebildet, daß der Saugnapf einen angeformten Befestigungsansatz aufweist, der von der seiner Napfseite gegenüberliegenden Seite zentrisch abragt und in ein Loch des Stützelementes formschlüssig eingreift.

Gemäß einem zweiten Vorschlag der Erfindung kann der erfindungsgemäße Abstandhalter so ausgebildet sein, daß Stützelement und Haftelement(e) als einstückiges Spritzgußteil aus Kunststoff hergestellt sind. Dadurch kann in vielen Fällen die Herstellung des Abstandhalters stark verbilligt werden.

Der erfindungsgemäße Abstandhalter gemäß Anspruch 1 oder Anspruch 2 kann so ausgebildet sein, daß das Haftelement und das Stützelement der Kontur des zur Auflage kommenden Bauteils angepaßt sind. Diese ist insbesondere beim Stapeln von gewölbten Bauteilen zweckmäßig.

Der erfindungsgemäße Abstandhalter kann so ausgebildet sein, daß der Querschnitt des Stützelements der Kontur einer Aufnahme des zur Auflage kommenden Bauteils angepaßt ist. Der Abstandhalter greift dabei in die Aufnahme ein und sichert somit besonders zuverlässig die gewünschte Plazierung der Bauteile zueinander.

Der erfindungsgemäße Abstandhalter hat in all seinen Ausführungen den Vorteil, daß er wiederverwendbar ist, also zu erheblichen Materialeinsparungen führt.

Im folgenden Teil der Beschreibung werden Ausführungsformen des erfindungsgemäßen Abstandhalters anhand von Zeichnungen beschrieben.

Es zeigen:
- Fig. 1: perspektivische Darstellung einer Ausführungsform des erfindungsgemäßen Abstandhalters mit Saugnapf,
- Fig. 2: zwei Schnittdarstellungen des Abstandhalters gemäß Fig. 1, eine im unbelasteten Zustand vor dem Aufsetzen auf eine Glasscheibe und eine im belasteten Zustand nach dem Einsetzen zwischen zwei Glasscheiben, und

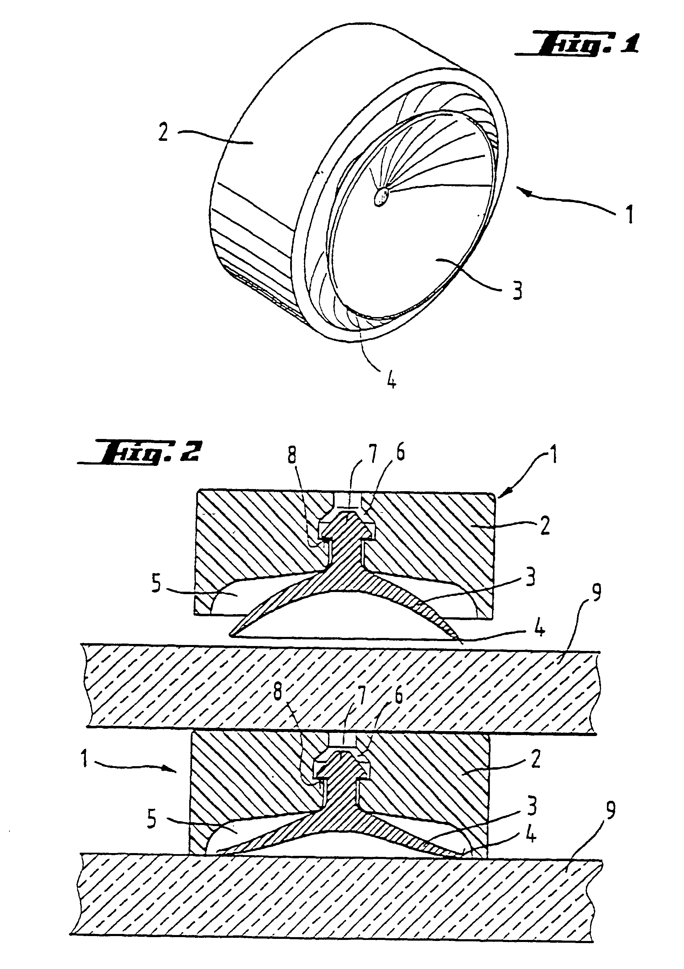

Gemäß Fig. 1 besteht ein Abstandhalter 1 aus einem zylindrisch-scheibenförmigen Stützelement 2 und einem damit fest jedoch lösbar verbundenen Haftelement in Form eines Saugnapfes 3 mit einer randseitigen Dichtlippe 4. Der Außendurchmesser des Saugnapfes 3 ist kleiner als der des Stützelements 2. Der äußere Umriß des Abstandhalters ist unerheblich. Er kann insbesondere rund oder mehreckig sein.

Insbesondere in der Schnittansicht gemäß Fig. 2 erkennt man den Aufbau des Abstandhalters 1. In einer der Stirnseiten des Stützelements 2 ist eine Vertiefung 5 vorgesehen. Deren lichter Raum ist so bemessen, daß der Saugnapf 3 in einem teilweise zusammengedrückten Zustand darin vollständig eintauchen kann. Insbesondere ist der Innendurchmesser der Vertiefung 5 geringfügig größer als der Außendurchmesser der Dichtlippe 4. Zentrisch am Boden der Vertiefung 5 ist ein hinterschnittenes Loch 6 angebracht, das man als Sackloch oder auch, wie hier gezeigt, als Durchgangsbohrung ausführen kann. In dieses Loch 6 ist ein Befestigungsansatz 7 des Saugnapfes 3 eingeführt, der von der der Napfseite gegenüberliegenden Seite vorsteht und seinerseits in an sich bekannter Weise aus einem im wesentlichen zylindrischen Schaft und einer darüber vorgesehenen Ringschulter 8 besteht.

Der Befestigungsansatz 7 ist vorzugsweise einstückig aus demselben Material wie der Saugnapf 3 gefertigt. Die Ringschulter 8 ist in den Hinterschnitt des Lochs 6 eingefallen. Damit ist der Saugnapf3 formschlüssig mit dem Stützelement 2 verrastet.

Mit erhöhtem Kraftaufwand kann man den Saugnapf 3 vom Stützelement 2 trennen. Die hierzu erforderliche Lösekraft muß größer sein als die Abhebekraft, mit der sich der vollständige Abstandhalter 1 von einer glatten Unterlage trennen läßt. Ist das Loch 6 als Durchgangsloch ausgeführt, so kann man den Saugnapf 3 mit einem geeigneten stiftförmigen Werkzeug von seiner Rückseite her zerstörungsfrei aus der Vertiefung 5 hinausdrücken. Diese lösbare Verbindung unterstützt den Austausch eines defekten Saugnapfes 3 und schließlich die Stofftrennung bei einer Wiederverwertung der beiden unterschiedlichen Materialien des Abstandhalters 1.

Im unteren Teil der Fig. 2 erkennt man, wie der Saugnapf 3 nach dem Einsetzen des Abstandhalters 1 zwischen zwei Glasscheiben 9 vollständig in die Vertiefung 5 eingetaucht ist. Zwischen seiner Napfseite und der unteren Glasscheibe 9 ist noch ein kleines Luftvolumen eingeschlossen, während der Außenrand der Vertiefung 5 auf der unteren Glasscheibe 9 aufsitzt und die obere Glasscheibe 9 auf der Oberseite des Abstandhalters bzw. des Stützelements 2 mit dem gewünschten bzw. benötigten Abstand abgestützt ist. Der Saugnapf 3 ist also vollständig von sämtlichen Stützkräften entlastet und damit sicher vor Überlastung geschützt. Nach dem Aufsetzen auf eine Glasscheibe 9 kann man den Abstandhalter 1 auch noch in der Fläche positionieren. ohne ihn wieder abzulösen. Dabei kann der Saugnapf 3 bzw. dessen Dichtlippe 4 vorübergehend mit der Innenseite der Vertiefung 5 in Berührung kommen und wird von dieser mitgenommen.

Im Ruhezustand, der im oberen Teil der Fig. 2 erkennbar ist, ragt die Dichtlippe 4 des Saugnapfes 3 in axialer Richtung nur unwesentlich über den Stirnrand der Vertiefung 5 hinaus, während sie radial gegenüber diesem Rand sogar zurückspringt.

Die Höhe des Abstandhalters 1 wird von den Anforderungen an die zwischen den Glasscheiben 9 einzuhaltenden Abstände bestimmt. Eine untere Begrenzung der Höhe ergibt sich aus der Höhe des Saugnapfes 3 nebst dem Befestigungsansatz 7. Die Dicke des Stützelements 2 kann so weit verringert werden, daß die freie Stirnfläche des vollständig in das Loch 6 eingeführten Befestigungsansatzes 7 gerade eben mit der Oberseite des Stützelements 2 fluchtet, so daß die effektive Höhe des so gebildeten Abstandhalters im wesentlichen gleich ist der Höhe des unbelasteten Saugnapfs 3.

Abweichend von den Figuren kann das Stützelement Aussparungen aufweisen, welche einerseits den Materialverbrauch mindern, andererseits gezielt zum Einstellen der Steifigkeit bzw. elastischen Nachgiebigkeit und Pufferfähigkeit des Stützelements dienen. Diese Aussparungen können auch in die vom Saugnapf abgewandte Auflagefläche eingeformt sein.

Die Maßgenauigkeit des Saugnapfs bzw. der Teile und des Stützelements unterliegt keinen besonderen Anforderungen, so daß diese Teile in großen Stückzahlen billig herstellbar sind.

### Bezugszeichenliste

- 1: Abstandhalter
- 2: Stützelement
- 3: Saugnapf
- 4: Dichtlippe
- 5: Vertiefung
- 6: Loch
- 7: Befestigungsansatz
- 8: Ringschulter
- 9: Glasscheiben

## Patentansprüche

1. Abstandhalter, insbesondere zum Einsetzen zwischen Glasscheiben, mit einem abstandbestimmenden Stützelement (2) und einem bei Belastung in eine Ausnehmung (5) des Stützelements zurückdrängbaren Saugnapf (3), der einen Befestigungsansatz (7) mit einer auskragenden Ringschulter (8) aufweist und im Bereich des Bodens der Ausnehmung an dem Stützelement festgelegt ist.,
**dadurch gekennzeichnet,**
**dass** das Stützelement zylindrisch oder mehreckig scheibenförmig aus Kunststoff ausgebildet ist, dass in dem Stützelement ein Loch (6) mit einer Hinterschneidung vorgesehen ist,
**dass** Ringschulter (8) und Hinterschneidung in einer formschlüssigen lösbaren, einen Austausch des Saugnapfes ermöglichendenVerbindung stehen,
**dass** das Stützelement aufgrund seines Materials oder seiner Formgebung härter ist als der Saugnapf und
**dass** der Abstandhalter wiederverwendbar ist.

2. Abstandhalter, insbesondere zum Einsetzen zwischen Glasscheiben, mit einem abstandbestimmenden Stützelement und einem bei Belastung in eine Ausnehmung des Stützelements zurückdrängbaren Saugnapf,
**dadurch gekennzeichnet,**
**dass** Stützelement (2) und Saugnapf (3) einstückig ausgebildet sind,
**dass** das Stützelement zylindrisch oder mehreckig scheibenförmig aus Kunststoff ausgebildet ist und
**dass** der Abstandhalter wiederverwendbar ist.

3. Abstandhalter nach Anspruch 1 oder 2, **dadurch gekennzeichnet, dass** der Saugnapf und das Stützelement der Kontur des zur Auflage kommenden Bauteils angepasst sind.

4. Abstandhalter nach einem der vorhergehenden Ansprüche, **dadurch gekennzeichnet, dass** der Querschnitt des Stützelements der Kontur einer Aufnahme des zur Auflage kommenden Bauteils angepasst ist.

## Claims

1. Spacer, in particular for use between plates of glass, having a spacing supporting element (2) and a suction cup (3) which can be forced back into a recess (5) of the supporting element when subjected to loading, has a fastening extension (7) with a projecting annular shoulder (8) and is secured on the supporting element in the region of the base of the recess,
**characterized**
**in that** the supporting element is designed in a cylindrical or polygonal manner, in plate form, from plastic,
**in that** a hole (6) with an undercut is provided in the supporting element,
**in that** the annular shoulder (8) and undercut are connected in a form-fitting releasable manner which allows the suction cup to be exchanged,
**in that**, on account of its material or of its shaping, the supporting element is more rigid than the suction cup,
and **in that** the spacer can be reused.

2. Spacer, in particular for use between plates of glass, having a spacing supporting element and a suction cup which can be forced back into a recess of the supporting element when subjected to loading,
**characterized**
**in that** the supporting element (2) and suction cup (3) are formed integrally with one another,
**in that** the supporting element is designed in a cylindrical or polygonal manner, in plate form, from plastic,
and **in that** the spacer can be reused.

3. Spacer according to Claim 1 or 2, **characterized in that** the suction cup and the supporting element are adapted to the contour of the abutting component.

4. Spacer according to one of the preceding claims, **characterized in that** the cross section of the supporting element is adapted to the contour of a receiving means of the abutting component.

## Revendications

1. Intercalaire, en particulier à insérer entre des vitres, avec un élément de soutien (2) déterminant la distance et une ventouse (3) rétractable sous charge dans un creux (5) de l'élément de soutien, qui présente une portée de fixation (7) avec un épaulement annulaire saillant (8) et qui est attachée à l'élément de soutien dans la région du fond du creux,
**caractérisé**
**en ce que** l'élément de soutien a la forme d'un disque cylindrique ou polygonal en matière plastique,
**en ce qu'**il est prévu dans l'élément de soutien un trou (6) avec une contre-dépouille,
**en ce que** l'épaulement annulaire (8) et la contre-dépouille forment un assemblage à emboîtement amovible, permettant un échange de la ventouse,
**en ce que** l'élément de soutien est plus dur que la ventouse à cause de sa matière ou de son formage,
et **en ce que** l'intercalaire est réutilisable.

2. Intercalaire, en particulier à insérer entre des vitres, avec un élément de soutien déterminant la distance et une ventouse rétractable sous charge dans un creux de l'élément de soutien,
**caractérisé**
**en ce que** l'élément de soutien (2) et la ventouse (3) sont formés d'une seule pièce,
**en ce que** l'élément de soutien a la forme d'un disque cylindrique ou polygonal en matière plastique, et
**en ce que** l'intercalaire est réutilisable.

3. Intercalaire suivant la revendication 1 ou 2, **caractérisé en ce que** la ventouse et l'élément de soutien sont adaptés au contour de l'élément de construction venant s'y appuyer.

4. Intercalaire suivant l'une quelconque des revendications précédentes, **caractérisé en ce que** la section transversale de l'élément de soutien est adaptée au contour d'un logement destiné à recevoir l'élément de construction venant s'y appuyer.
